Europäisches Patentamt

(19) **European Patent Office**

Office européen des brevets

(11) Veröffentlichungsnummer: **0 003 324**
**B2**

(12) **NEUE EUROPÄISCHE PATENTSCHRIFT**

(45) Veröffentlichungstag der neuen Patentschrift:
30.04.86

(51) Int. Cl.⁴: **C 08 F 210/02**, C 08 F 2/00

(21) Anmeldenummer: 79100145.6

(22) Anmeldetag: 18.01.79

(54) Verfahren zur Herstellung von Copolymerisaten des Äthylens.

(30) Priorität: 24.01.78 DE 2802866

(43) Veröffentlichungstag der Anmeldung:
08.08.79 Patentblatt 79/16

(45) Bekanntmachung des Hinweises auf die Patenterteilung:
03.02.82 Patentblatt 82/5

(45) Bekanntmachung des Hinweises auf die Entscheidung über den Einspruch:
30.04.86 Patentblatt 86/18

(84) Benannte Vertragsstaaten:
BE DE FR GB

(56) Entgegenhaltungen:
DE - A - 1 445 229
DE - A - 2 524 230
FR - A - 2 313 405
US - A - 3 306 889
US - A - 3 577 224
US - A - 3 988 509

(73) Patentinhaber: BASF Aktiengesellschaft,
Carl-Bosch-Strasse 38, D-6700 Ludwigshafen (DE)

(72) Erfinder: Zacher, Wieland, Dr., Lauenburger Strasse 2,
D-5047 Wesseling (DE)
Erfinder: Pfleger, Klaus, Dr., Otto-Strasse 6,
D-5047 Wesseling (DE)
Erfinder: Boettcher, Klaus, Dr., Hubertusstrasse 57,
D-5047 Wesseling (DE)
Erfinder: Skorczyk, Ronald, Langemarckstrasse 38,
D-5300 Bonn-Oberkassel (DE)
Erfinder: Buechner, Oskar, Dr., Sickingenstrasse 4,
D-6724 Dudenhofen (DE)

**Beschreibung**

Die Erfindung betrifft ein Verfahren zur kontinuerlichen Herstellung von Äthylencopolymerisaten.

Bei diesem Verfahren werden Äthylencopolymerisate erhalten durch Copolymerisation von Äthylen mit Äthylen copolymerisierbaren Comonomeren in einer rohrförmisch Polymerisationszone bei Drücken von 1 500 bis 5 000 bar und Temperaturen von 150 bis 350°C in Gegenwart von Sauerstoff, Überführen des gebildeten Reaktionsgemischs in eine Hochdruckprodukttrennzone, in der ein Druck zwischen 100 und 500 bar und eine Temperatur zwischen 150 und 250°C herrscht, in eine nachfolgend angeordnete, Niederdruckprodukttrennzone, in derein Druck zwischen 1 bis 10 bar und eine Temperatur zwischen 150 und 250°C herrscht, in einen Austragsextruder und Rückführung der gesamten nicht umgesetzten Gasmengen aus Äthylen und Comonomeren aus der Hochdruckprodukttrennzone ohne Druckentspannung in den Polymerisationsprozess. Bei derartigen Verfahren sind Maßnahmen erforderlich, um die bei der Copolymerisation nicht umgesetzten Comonomeren aus den Äthylenrücklaufströmen vor der Rückführung in den Polymerisationsprozeß zur weiteren Polymerisation oder zu anderen Zwecken abzutrennen. Die Rückführung der nicht umgesetzten Gasmengen erfolgt dabei üblicherweisein zwei Äthylenrücklaufströmen, wobei der eine Strom aus der Hochdruckprodukttrennzone stammt undHochdruckkreisgas, der andere aus der Niederdruckprodukttrennzone kommt und Niederdruckkreisgas genannt wird. Die Kreisgasführung bei der Hochdruckpolymerisation von Äthylen ist allgemein bekannt und beispielsweise in der US--PS 3 1 17 953,"Ullmann's Enzyklopädie der technischen Chemie", Verlag Urban & Schwarzenberg, München Berlin, 1963, 3. Auflage, Band 14, Seiten 139bis 145 und im "Kunststoffhandbuch", Verlag Carl Hanser, München 1969, Band IV, Seiten 39bis 52, beschrieben. Die Kreisführung der gesamten Gasmengen aus der Hochdruckprodukttrennzone in diePolymerisationszone ist in der US--PS 3 988 509 beschrieben.

Nach den bekannten Verfahren wird die Abtrennung der nicht umgesetzten Comonomeren aus dem Kreisgas der Anlage dadurch erreicht, daß man einen Teil oder die gesamte Gasmenge des bei Drücken von 100 bis 500 bar betriebenen Hochdruckkreises entspannt. Bei dieser Entspannung kühlt sich das Gasgemisch auf Temperaturen unterhalb 0°C ab, wobei sich dem Dampfdruck entsprechend die betreffenden Comonomeren mehr oder weniger vollständig abscheiden. Die Gasmenge des im Hochdruckkreis befindlichen Gasgemischs wird ganz oder zum Teil in einem sogenannten Tieftemperaturabscheider entspannt. In diesen Tieftemperaturabscheider wird auch die gesamte, aus der Niederdruckprodukttrennzone kommende Schubgasmenge, eingeleitet. Die Tieftemperaturabscheider sind an sich wohl bekannt und beispielsweise in DE-PS 954 921, DE-PS 1 445 229 und US-PS 3 336 281 beschrieben.

Die bekannten, nach dem geschilderten Prinzip arbeitenden Verfahren haben den Nachteil, daß sie unwirtschahlich sind und daß beim Entspannen des Gasgemischs aus dem Hochdruckkreis wachsartige niedermolekulare Stoffe mit den Comonomeren im Tieftemperaturabscheider abgeschieden werden.

Diese aus dem Hochdruckkreis ausgeschleusten Produkte fallen als feste Stoffe an, verursachen Störungen beim Ablassen der abgeschiedenen Comonomeren aus dem Tieftemperaturabscheider in dem nachfolgend angeordneten Sammelbehälter und verhindern, daß die Comonomeren ohne Reinigungsverfahren wieder in den Polymerisationsprozeß eingesetzt werden können. Die Unwirtschaftlichkeit der bekannten Verfahren liegt darin, daß die aus dem Hochdruckkreis zur Erzeugung der niedrigeren Temperaturen im Tieftemperaturabscheider entspannte Gasmenge, die wesentlich größer ist als die zu reinigende Abgasmenge, bei Wiederverwendung erneut auf 100 bis 500, bevorzugt 250 bis 350 bar aufkomprimiert werden muß. Ein weiterer Nachteil der bekannten Verfahren ist der, daß das aus dem Polymerisationsprozeß als sogenanntes Abgas ausgeschleuste Äthylen noch beträchtliche Anteile an Comonomeren enthält, die verloren gehen bzw. bei einer Gasreinigung vernichtet werden müssen. So wirken sich diese im Abgas vorliegenden Comonomerenanteile bei der Weiterverwendung des ausgeschleusten Äthylenabgases als Katalysatorgifte bei Alkylierunge, Hydrierungen und sonstigen chemischen Prozessen nachteilig aus.

Der vorliegenden Erfindung lag die Aufgabe zugrunde, das eingangs beschriebene Verfahren so abzuwandeln. daß eine verbesserte und wirtschaftlichere Abscheidung der im Polymerisationsprozeß nicht umgesetzten Comonomeren erreicht wird und darüber hinaus nur noch geringe Mengen an Comonomerenanteil im Abgas verbleiben.

Die Aufgabe wird erfindungsgemäß dadurch gelöst, daß ausschließlich dieaus der Niederdruckprodukttrennzone abgezogene Gasmenge komprimiert, auf eine Temperatur von -10 bis - 30°C gekühlt und in einen Tieftemperaturabscheider geführt wird und die dort abgeschiedenen Comonomeren wieder in den Polymerisationsprozeß eingespeist werden.

Nach bevorzugten Verfahren wird die aus der Niederdruckprodukttrennzone kommende Gasmenge auf 10 bis 20 bar komprimiert, bevor sie in den Tieftemperaturabscheider gelangt.

Die mit der Erfindung erzielbaren Vorteile bestehen insbesondere darin, daß eine deutliche Verbesserung des Abscheideeffektes an Comonomeren gelingt. Es scheiden sich bei den erfindungs-gemäßen Verfahren mit dem Comonomeren keine vom Hochdruckkreis kommenden Feststoffe und Wachse ab, die einen erneuten Einsatz der abgeschiedenen Comonomeren unmöglich machen. Das erfindungsgemäße Verfahren hat außerdem den Vorteil, daß die abgeschiedenen Comonomeren ohne Reinigung direkt in den Polymerisationsprozeß wieder eindosiert werden können. Im Abgas des erfindungsgemäßen Verfahrens verbleiben nur noch geringe Mengen an Comonomeranteilen. Es wird außerdem kein Gas aus dem Hochdruckkreis entspannt, so daß kein aufwendiges Aufkomprimieren des Kreisgases aus der Hochdruckproduktzone erforderlich ist.

Unter Äthylencopolymerisaten werden die Copolymerisate des Äthylens verstanden, die bei den angegebenen Temperatur- und Druckverhältnissen herstellbar sind. Der Ausdruck Äthylencopolymerisate umfaßt Copolymerisate mit Gehalten an einpolymerisiertem Comonomerenanteil von bis zu 50, bevorzugt 0,1 bis 30 Gewichtsprozent, die einen Schmelzindex von 0,1 bis 50 g/10 min, bestimmt nach ASTM-D-1238-65 T bei einer Temperatur von 190°C und einemAuflagegewicht von 2,16 kg, und eine Dichte von 0,890 bis 0,934 g/cm$^3$, gemessen nach DIN 53 479, aufweisen.

Unter Copolymerisation von Äthylen versteht man die bei Drücken von 1 500 bis 5 000 bar und Temperaturen von 150 bis 350°C herstellbaren Äthylencopolymerisate. Dabei können sämtliche Kettenübertragungsmittel, die für die Copolymerisation des Äthylens unter hohem Druck bekannt sind, im Rahmen des Verfahrens eingesetzt werden. Als mit Äthylen copolymerisierbare Comonomere kommen sämtliche mit Äthylen bei den angegebenen Temperaturen und Druckverhältnissen copolymerisierbaren Verbindungen in Betracht. Solche Comonomere sind z.B. Vinylester von $C_2$- bis $C_4$-Alkancarbonsäuren wie Vinylacetat oder Vinylpropionat; $C_2$- bis $C_4$-Alkylester der $C_3$- bis $C_4$-Alkencarbonsäuren wie Acrylsäure -n- oder -tert.-butylester; Acrylnitril; Acrylsäureamid; $C_2$- bis $C_4$-Alkencarbonsäuren wie Acrylsäure oder Vinyläther, die sichvon Alkenen mit 3 bis 8 C-Atomen ableiten. Als Initiatoren verwendet man Sauerstoff,

Das Verfahren läßt sich unter Anwendung der üblichen kontinuierlich betriebenen Hochdruckpolymerisationssysteme ausführen. Unter Polymerisationszonen werden die üblichen Rohrreaktoren verstanden. Unter Rohrreaktoren versteht man rohrförmige Polymerisations-gefäße, deren Verhältnis Länge zum Durchmesser der druckfesten Rohre im Bereich 10 000 bis 60 000 zu 1 liegt. Angaben über Verfahren, bei denen Rohrreaktoren benutzt werden, finden sich beispielsweise in "Ullmanns Enzyklopädie der technischen Chemie", 1963, 3. Auflage, Band 14, Seiten 137 bis 148.

Im Anschluß an die Polymerisation wird das Reaktionsgemisch in eine Hockdruckprodukttrennzone, auch Hochdruckproduktabscheider genannt, geleitet, in der ein Druck zwischen 100 und 500, bevorzugt 250 bis 350 bar und eine Temperatur zwischen 150 und 250°C herrscht. In diesem Hochdruckproduktabscheider wird das im Reaktor erhaltene Äthylencopolymerisat von nicht polymerisierten Monomeren abgetrennt. Aus dem Hochdruckproduktabscheider wird das Copolymerisat in die Niederdruckprodukttrennzone, auch Niederdruckproduktabscheider genannt, geführt. In diesem Niederdruckproduktabscheider herrscht ein Druck zwischen1 und 10, bevorzugt 2,5 bis 3 5 bar und eine Temperatur zwischen 150 und 250°C. Das im Hochdruckproduktabscheider vom Copolymerisat abgetrennt Gas, bestehend aus Äthylen und Comonomeren, wird nicht entspannt, sondern nach Passieren eines sogenannten Nachverdichters, wo es wieder auf Reaktionsdruck aufkomprimiert wird, in die Polymerisationszone eingeleitet. Bei der Rückführung des Hochdruckkreisgases in den Polymerisationsprozeß wird kein Teil der bei Drücken oberhalb von 100 bar betriebenen Gasmenge entspannt. Von der Niederdruckprodukttrennzone wird das erhaltene Copolymerisat in bekannter Weise in einen Austragsextruder geführt und dortkonfektioniert. Als Hoch- und Niederdruckproduktabscheider werden die aus der Literatur bekannten Gefäße eingesetzt.

Die in der Niederdruckprodukttrennzone abgetrennten flüchtigen Komponenten, bestehend aus Äthylen und Comonomeren, werden in einem Verdichter komprimiert und in einem Kühlaggregat auf-10 bis-30°C, bevorzugt auf -24 bis-26°C gekühlt bevor sie in einen Tieftemperaturabscheider geleitet werden. Als Verdichter und Kühlaggregat kommen die üblichen Aggregate in Betracht, z.B. zweistufige Kolbenverdichter bzw. übliche Kältemaschinen. Im Tieftemperaturabscheider wird in bekannter Weise das Comonomer vom Äthylengas abgetrennt. Die im Tieftemperaturabscheider abgetrennten Comonomerteile werden über einen Schwimmerkondenstopf kontinuierlich in einem Sammelabscheider ausgeschleust. Aus diesem Sammelabscheider werden die Comonomeren, zusammen mit frisch zugeführten Comonomeren aus einem Vorlagebehälter, mit Dosierpumpen in den Polymerisationsprozeß eingegeben. Das im Tieftemperaturabscheider abgetrennte Äthylen wird zum Teil als Rückgas zur weiteren Polymerisation verwendet zum Teil in die Abgasleitung eingeführt. Zweckmäßig wird etwa ein Drittel des aus dem Niederdruckproduktabscheider stammende Äthylenrücklaufstroms in den Polymerisationsprozeß neu eindosiert. Nach bevorzugter Vefahrensweise wird die dem Niederdruckproduktabscheider entnommene Gasmenge in dem Verdichter auf 10 bis 20 bevorzugt 14 bis 16 bar komprimiert auf -10 bis -30°C bevorzugt auf -24 bis -26°C. bevor sie in den oben erwähnten Tieftemperaturabscheider gelangt.

**Beispiel**

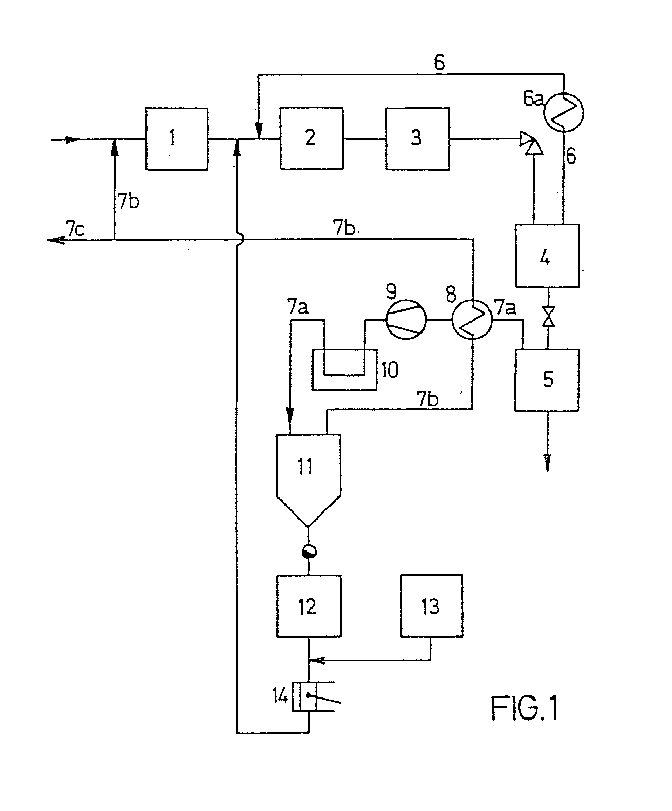

Das erfindungsgemäße Verfahren wird anhand der Figur 1 im Anhang beschrieben:

Einem Rohrreaktor (3) wird pro Stunde ein in Vorverdichter (1) und Nachverdichter (2) stufenweise auf 2 100 bar komprimiertes Gemisch zugeführt, das aus 9 460 kg Äthylen, 1 415 kg Vinylacetat und 15 Mol Sauerstoff je eine Million Mole Äthylen besteht. Das Reaktionsgemisch erreicht in der Reaktionszone (3) eine Spitzentemperatur von 305°C, die freiwerdende Reaktionswärem wird mit Druckwasser abgeführt. Vom Reaktor (3) aus gelangt das Reaktionsgemischin den Hochdruckproduktabscheider (4), in dem ein Druck von 300 bar und eine Temperatur von 220°C herrsch und von dort aus in den Niederdruckproduktabscheider (5), der bei einem Druck von 3 bar und bei einer Temperatur von 210°C betrieben wird. Man erhält pro Stunde 1 780 kg eines sehr homogenen Äthylencopolymerisats der Dichte 0,934 g/cm$^3$ und des MFi 4,12 g/l0 min, das 13,0 Gewichtsprozent Vinylacetat einpolymerisiert enthält.

Vom Hochdruckkreis (6) wird kein Gas in den Tieftemperaturabscheider (1) entspannt, sondern die gesamte Gasmenge aus dem Hochdruckproduktabscheider (4) durch ein Kühlsystem (6a) über die Leitung (6) zum Nachverdichter (2) geführt. Die Abtrennung des im Reaktor (3) nicht umgesetzten Vinylacetates erfolgt derart, daß die gesamte Schubgasmenge, die 380 kg/Stunde beträgt und ausschließlich aus dem Niederdruckproduktabscheider (5) kommt, über die Leitung (7a) durch einen Wärmeaustauscher (8) in einem Verdichter (9) von 3 auf 15 bar aufkomprimiert, mit einem Kühlaggregat (10) auf -25°C gebracht wird und in den Tieftemperaturabscheider (11) eingeleitet wird. Im Sammelabscheider (12) fallen pro Stunde 48,6 kg Vinylacetat an, das wieder in den Prozeß eingeleitet wird. Das den Tieftemperaturabscheider (11) verlassende, von Vinylacetat weitgehend befreite Äthylen wird zu etwa einem Drittel durch die Leitung (7b) als Rückgas dem Vorverdichter (2) zugeführt (Niederdruckkreis), die übrige Menge wird durch die Leitung (7c) als Abgas aus dem Prozeß abgeführt, Die pro Stunde abgeführten 221 kg Abgas enthalten 0,44 kg Vinylacetat; das entspricht einem Vinylacetatgehalt des Abgases von 0,2 Gewichtsprozent. Zu der im Sammelabscheider (12) anfallenden Vinylacetatmenge von 48,6 kg werden weitere 232 kg frisches Vinylacetat aus dem Vorlagebehälter (13), d.h. insgesamt 280,6 kg pro Stunde, mit der Dosierpumpe (14) dem Copolymerisationsprozeß zugegeben.

**Vergleichsbeispiel**

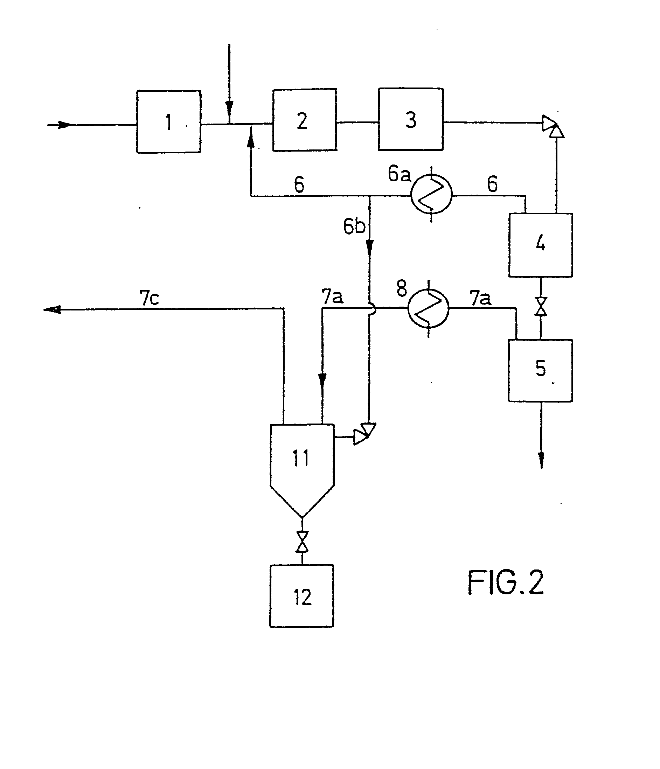

Das Verfahren gemäß dem Stand der Technik wird anhand der Figur 2 im Anhang beschrieben: Wie im Beispiel 1 gemäß Erfindung wird einem Rohrreaktor (3) ein im Vorverdichter (1) und Nachverdichter (2) stufenweise auf 2 100 bar komprimiertes Gemisch aus 9 460 kg Äthylen, 1415 kg Vinylacetat und 15 Mol Sauerstoff je eine Million Mole Äthylen zugeführt, Die Bedingungen im Reaktor (3), Hochdruckprodukt- (4) und Niederdruckproduktabscheider (5) stimmen mit denen im erfindungsgemäßen Beispiel genannten überein, Man erhält 1 780 kg eines homogenen Äthylencopolymerisates der Dichte 0,934 g/cm$^3$ und des MFI 4,12 g/l 0 min, das 13,0 Gewichtsprozent Vinylacetat einpolymerisiert enthält.

Im Gegensatz zum Beispiel gemäß Erfindung wird die Abtrennung des im Reaktor (3) nicht umgesetzten Vinylacetats derart durchgeführt, daß nach Passieren des Kühlsystems (6a) eine Teilmenge, nämlich 1 134 kg, des im Hochdruckkreis (6) bei 300 bar gefahrenen Gasgemisches über die Leitung (6b) in den Tieftemperaturabscheider (11) entspannt wird, während die Hauptmenge des Kreisgases im Hochdruckkreis (6) bleibt und zum Nachverdichter (2) geführt wird. In den Tieftemperaturabscheider (11) wird die gesamte Schubgasmenge von 380 kg aus dem Niederdruckproduktabscheider (5) durch die Leitung (7a) nach Passieren des Kühlsystems (8) ebenfalls eingeleitet. Die bei einem Druck von 3 bar und einer Temperatur von -25°C in diesem Tieftemperaturabscheider (11) anfallende Vinylacetatmenge beträgt 181,5 kg. Das den Tieftemperaturabscheider (11) verlassende Äthylen (1 514 kg) enthält noch 15,1 kg Vinylacetat und muß als Abgas durch die Leitung (7c) aus dem Prozeß abgeführt werden; das entspricht einem Vinylacetatgehalt des Abgases von 1,0 Gewichtsprozent, Das im Tieftemperaturabscheider (11) anfallende Vinylacetat kann ohne vorherige Reinigung nicht wieder in den Copolymerisationsprozeß eingesetzt werden, da es zu stark verunreinigt ist. Es müssen 454 kg frisches Vinylacetat in den Prozeß eingegeben werden.

Die Mengenangaben beziehen sich jeweils auf den Zeitraum von 1 Stunde.

**GEGENÜBERSTELLUNG**

| | Eindosierte VA-Menge | abgeschiedene VA-Menge | im Abgas enthaltene VA-Menge |
|---|---|---|---|
| Beispiel gemäß Erfindung | 280,6 kg/h[xx] | 48,6 kg/h[x] | 0,44 kg/h |
| Vergleichsbeispiel | 454 kg/h | 181,5 kg/h | 15,1 kg/h |

[x] wird wieder in den Prozeß eindosiert

[xx] incl. der in Abscheider angefallenen und wieder verwendbaren VA-Menge von 48,6 kg

(VA ≡ Vinylacetat)

Die Mengenangaben beziehen sich auf den Zeitraum von 1 Stunde.

**Patentansprüche;**

1) Verfahren zur kontinuierlichen Herstellung von Äthylencopolymerisaten durch Copolymerisation von Äthylen mit mit Äthylen copolymerisierbaren Comonomeren in einer rohrförmigen Polymerisationszonszone bei Drücken von 1 500 bis 5 000 bar und Temperaturen von 150 bis 350°C in Gegenwart von Sauerstoff, Überführen des gebildeten Reaktionsgemisches in eine Hochdruckprodukttrennzone, in der ein Druck zwischen 100 und 500 bar und eine Temperatur zwischen 150 und 250°C herrscht, in eine nachfolgend angeordnete Niederdruckprodukttrennzone, in der ein Druck zwischen 1 und 10 bar und eine Temperatur zwischen 150 und 250°C herrscht, in einen Austragsextruder und Rückführung der gesamten nicht umgesetzten Gasmengen aus Äthylen und Comonomeren aus der Hochdruckprodukttrennzone ohne Druckentspannung in den Polymerisationsprozeß, dadurch gekennzeichnet, daß ausschließlich die aus der Niederdruckprodukttrennzone abgezogene Gasmenge komprimiert, auf eine Temperatur von -10 bis -30°C gekühlt und in einen Tieftemperaturabscheider geführt wird und die dort abgeschiedenen Comonomeren wieder in den Polymerisations-prozeß eingespeist werden.

2) Verfahren nach anspruch 1, dadurch gekennzeichnet daß die aus der Niederdruckprodukttrennzone abgezogene Gasmenge auf 10 bis 20 bar komprimiert wird, bevor sie in den Tieftemperaturabscheider gelangt.

**Revendications**

1. Procédé de préparation continue de copolymères d'éthylène par copolymérisation de l'éthylène et de comonomères copolymérisables avec celui-ci dans une zone de polymérisation tubulaire sous des pressions de 1500 à 5000 bars et à des températures de 150 à 350°C en présence d'oxygène, suivie du transfert du produit réactionnel formé dans une zone haute pression pour la séparation du produit, dans laquelle règne une pression entre 100 et 500 bars et une température entre 150 et 250°C, puis dans une zone basse pression pour la séparation du produit, disposée en aval, dans laquelle règne une pression entre 1 et 10 bars et une température entre 150 et 250°C, puis dans une boudineuse d'extrusion, la totalité des produits gazeux composés d'éthylene et de comonomères non transformés, séparés dans la zone de séparation haute pression, étant recyclée sans détente dans la zone de polymérisation, caractérisé en ce que seuls les produits gazeux soutirés de la zone de séparation basse pression sont comprimés, refroidis à une température comprise entre -10 et -30°C et amenés dans un séparateur à basse température, les comonomères séparés dans ce dernier étant recyclés dans l'opération de polymérisation.

2. Procédé suivant la revendication 1, caractérisé en ce que le produit gazeux soutiré de la zone de séparation basse pression est comprimé entre 10 et 20 bars avant d'être introduit dans le séparateur à basse température.

**Claims**

1. A process for the continuous manufacture of ethylene copolymers by copolymerization of ethylene with comonomers copolymerizable therewith, in a polymerization zone at pressures of from 1,500 to 5,000 bar and at from 150° to 350°C in the presence of oxygen, transfer of the resulting reaction mixture into a high pressure product isolation zone where a pressure of from 100 to 500 bar and a temperature of from 150° to 250°C prevail, then into a downstream low pressure product isolation zone where a pressure of from 1 to 10 bar and a temperature of from 150° to 250°C prevail, and thereafter into a discharge extruder, and recycling of the unconverted gas, comprising ethylene and comonomers, from the high pressure product isolation zone, without pressure let-down, to the polymerization process, characterized in that exclusively the gas taken off the low pressure product isolation zone is compressed, cooled to a temperature of from -10° to -30°C and fed into a low-temperature separator, and the comonomers separated off therein are recycled to the polymerization process.

2. A process as claimed in claim 1, characterized in that the gas taken off the low pressure product isolation zone is compressed to from 10 to 20 bar before passing into the low-temperature separator.

FIG.1

FIG.2